# EUROPÄISCHE PATENTSCHRIFT

(11) **EP 2 159 532 B1**
(45) Veröffentlichungstag und Bekanntmachung des Hinweises auf die Patenterteilung: **02.04.2014**
(21) Anmeldenummer: 09167971.2
(22) Anmeldetag: 17.08.2009
(51) Int. Cl.: F41H 7/00, B62D 1/16, B62D 21/00

(54) **Lenkungsdurchführung für militärisches Fahrzeug**
Steering lead-through for military vehicle
Traversée de direction pour véhicule militaire

(30) Priorität: 30.08.2008 DE 102008045206
(43) Veröffentlichungstag der Anmeldung: 03.03.2010
(73) Patentinhaber: Krauss-Maffei Wegmann GmbH & Co. KG, 80997 München (DE)
(72) Erfinder: Schuhmann, Manfred, 85276, Pfaffenhofen (DE); Stoiber, Wolfgang, 84036, Landshut (DE)
(74) Vertreter: Feder Walter Ebert

(56) Entgegenhaltungen:
- DE-A1- 2 750 890

## Beschreibung

Die Erfindung betrifft eine Lenkungsdurchführung für militärische Fahrzeuge mit einer durch eine Öffnung des Fahrzeugbodens hin und her bewegbar nach fahrzeugaußen geführten Lenkstange.

Bei Fahrzeugen wird eine Lenkstange, die an der einen Seite mit dem im Fahrzeuginneren angeordneten Lenkrad verbunden ist und deren anderes Ende mit dem unterhalb des Fahrzeugbodens angeordneten Lenkgestänge verbunden ist, über Lenkungsdurchführungen durch den Fahrzeugboden nach fahrzeugaußen geführt. Beispielsweise ist aus der DE 27 50 890 A1 ein militärisches Fahrzeug mit einer durch eine Öffnung im Boden eines Panzergehäuses hindurchgeführten Lenkstange bekannt, die gegen das Eindringen von Wasser in den Innenraum des Panzergehäuses abgedichtet ausgeführt ist.

Die Öffnung des Fahrzeugbodens ist üblicherweise größer dimensioniert als der Durchmesser der Lenkstange, um der Lenkstange ein Hin- und Herbewegen innerhalb der Öffnung zu ermöglichen, wie dieses zum Ausgleich von Bewegungen des Lenkgestänges etwa im Falle von Straßenunebenheiten erforderlich ist.

Dieses Übermaß der Öffnung gegenüber der Lenkstange hat sich insbesondere bei militärischen Fahrzeugen, die gegen äußere Blastwirkung, d.h. gegenüber Minen und sonstigen Detonationskörpern geschützt sind, als ballistische Schwachstelle erwiesen. Denn durch den zwischen der Öffnung und der Lenkstange verbleibenden Zwischenraum kann der etwa durch eine Landmine hervorgerufene Blast in den Fahrzeuginnenraum gelangen und dort zu schweren Verletzungen der Fahrzeugbesatzung führen.

**Aufgabe** der vorliegenden Erfindung ist es, eine Lenkungsdurchführung für militärische Fahrzeuge anzugeben, bei welcher die Gefahr von Verletzungen für die Fahrzeugbesatzung reduziert ist.

Diese Aufgabe wird bei einer Lenkungsdurchführung der eingangs genannten Art dadurch **gelöst,** dass ein die Öffnung gegen äußere Blastwirkung abschirmendes Schutzelement vorgesehen ist, das mit der Lenkstange derart gekoppelt ist, dass es die Öffnung unabhängig von den Bewegungen der Lenkstange stets verschlossen hält.

Mit Hilfe eines solchen Schutzelements, werden ballistische Schwächungen im Bereich der Lenkungsdurchführung vermieden. Die Öffnung zwischen der Lenkstange und dem Fahrzeugboden bleibt stets geschlossen, so dass kein Blast in das Innere des Fahrzeugs eintreten kann. Ein weiterer Vorteil liegt darin, dass im Rahmen von Wartungstätigkeiten, bei denen regelmäßig die gesamte Fahrzeugkabine und mit dieser die Lenkstange nach vorne gekippt wird, das Schutzelement dieser Bewegung folgt, ohne dass es in einem gesonderten Arbeitsschritt vom Fahrwerk zu lösen wäre.

Erfindungsgemäß wird vorgeschlagen, dass die Lenkstange durch eine Öffnung des Schutzelements lose hindurchgeführt und über ein Gelenk mit dem Schutzelement gekoppelt ist. Das Gelenk sorgt einerseits dafür, dass ein Hin- und Herbewegen der Lenkstange in der Ebene der Öffnung des Fahrzeugbodens auf das Schutzelement übertragen wird, wobei andererseits durch die lose Öffnungsdurchführung gewisse Winkeländerungen der Lenkstange gegenüber dem Schutzelement möglich sind, ohne dass das Schutzelement mit bewegt wird.

In diesem Zusammenhang wird weiter vorgeschlagen, dass die Öffnung des Schutzelements ein die Öffnung gegenüber der Lenkstange abdichtendes Element aufweist, welches den Spalt zwischen der Lenkstange und der Öffnung schließt.

Weiter wird vorgeschlagen, dass das Gelenk zwischen dem Schutzelement und einer die Lenkstange umgebenden Führungshülse angeordnet ist. Innerhalb der Führungshülse sind rotatorische und translatorische Bewegungen der Lenkstange möglich, ohne dass dabei das Schutzelement mitgenommen wird und insbesondere von der Öffnung des Fahrzeugbodens abhebt. Auf der anderen Seite wird durch die Kopplung der Führungshülse bzw. der Lenkstange über das Gelenk mit dem Schutzelement erreicht, dass bei einem Hin- und Herbewegen der Lenkstange innerhalb der Öffnung des Fahrzeugbodens das Schutzelement dieser Bewegung folgt und die Öffnung verschlossen bleibt.

Weiter wird vorgeschlagen, dass die Lenkstange im Bereich der Führungshülse mit einer lösbaren Verstärkung versehen ist. Die axiale Länge der Verstärkung ist so bemessen, dass der gesamte axiale Weg der Lenkstange innerhalb der Führungshülse abgedeckt ist. Die Verstärkung dient zum Schutz der Lenkwelle und gleichzeitig als Austauschteil, wenn beispielsweise der Bereich der Verstärkung aufgrund der Bewegungen innerhalb der Führungshülse verschlissen ist.

Vorteilhaft ist das Schutzelement unterhalb des Fahrzeugbodens angeordnet, wodurch sich eine zuverlässige Abschirmung gegenüber äusserer Blastwirkung erreichen lässt.

Weiter wird vorgeschlagen, dass das Schutzelement größer ist als die Öffnung des Fahrzeugbodens und flächig gegen diese anliegt. Das Übermaß des Schutzelements gegenüber der Öffnung bestimmt die maximale Weglänge, entlang welcher die Lenkstange in der Ebene der Öffnung des Fahrzeugbodens hin- und herbewegt werden kann, ohne dass ein Spalt zum Fahrzeuginnenraum entsteht.

In einer weiteren Ausgestaltung ist vorgesehen, dass das Schutzelement von einem am Fahrzeugboden festgelegten Halteelement gehalten wird, wodurch verhindert wird, dass das Schutzelement gemeinsam mit der die Lenkstange schiebbeweglich umgebenden Hülse nach unten rutschen kann.

Um die Bewegungen des Schutzelementes und mit diesem die Bewegungen der Lenkstange zu führen, ist in weiterer Ausgestaltung vorgesehen, dass das Schutzelement über Führungsmittel gegenüber dem Halteelement geführt bewegbar ist.

Weitere Einzelheiten und Vorteile der Erfindung werden nachfolgend unter Zuhilfenahme der beigefügten Zeichnungen eines Ausführungsbeispiels einer erfindungsgemäßen Lenkungsdurchführung erläutert. Darin zeigen:
- Fig. 1: eine Schnittansicht durch die Lenkungsdurchführung in einer die Mittelachse der Lenkstange schneidenden Schnittansicht,
- Fig. 2: eine vergrößerte Detailansicht des Bereichs des Schutzelements gemäß der Darstellung in Fig. 1,
- Fig. 3: eine Schnittansicht in einer zum Fahrzeugboden senkrechten Ebene und
- Fig. 4: eine perspektivische Ansicht der Lenkungsdurchführung von fahrzeuginnen her betrachtet.

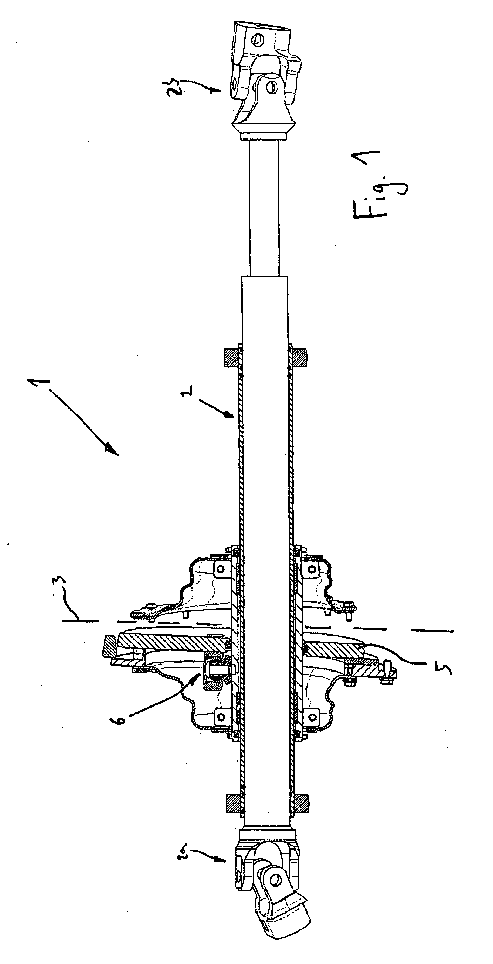

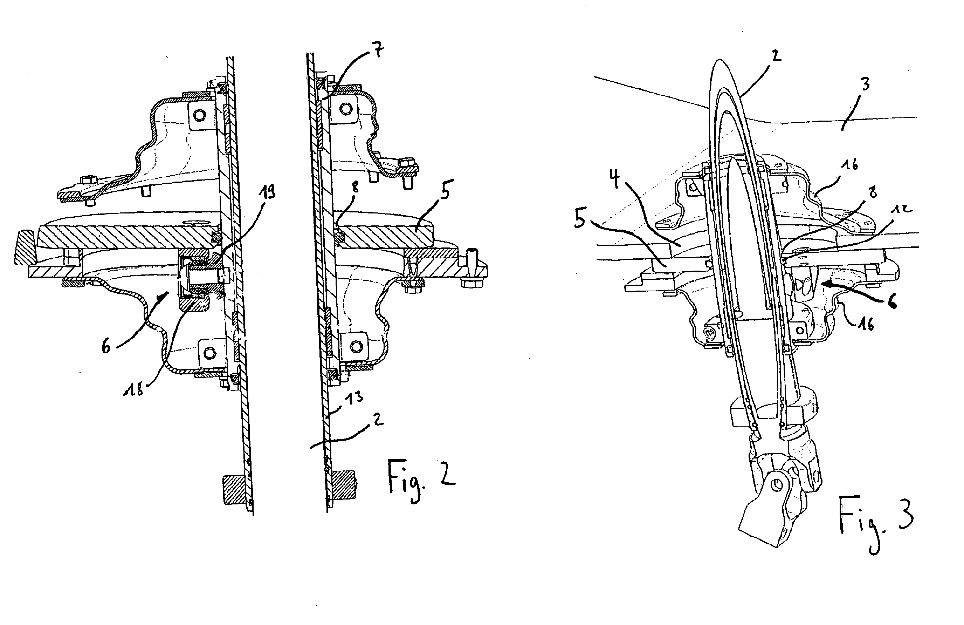

In Fig. 1 dargestellt ist eine Lenkungsdurchführung 1 für militärische LKW. Die Lenkungsdurchführung 1 weist eine Lenkstange 2 auf, deren eines Ende 2a mit dem fahrgestellfesten Lenkgestänge außerhalb des Fahrzeugs und deren anderes Ende 2b mit der fahrzeuginnen liegenden Lenkung verbunden ist. Die Verbindung der Enden 2a, 2b erfolgt beim Ausführungsbeispiel jeweils über Kardangelenke. Schematisch eingezeichnet ist anhand einer Strichlinie die Position des Fahrzeugbodens 3. Dieser weist eine Öffnung 4, vgl. Fig. 3, auf, durch welche die Lenkstange 2 nach fahrzeugaußen hindurchgeführt ist.

Da sich die Lenkstange 2 im Fahrbetrieb innerhalb dieser Öffnung 4 in Richtung des Fahrzeugbodens 3 hin- und herbewegt, ist die Öffnung 4 deutlich größer bemessen als der Durchmesser der Lenkstange 2. Der auf diese Weise entstehende Spalt zwischen der Lenkstange 2 und der Kontur der Öffnung 4 wird von unterhalb des Fahrzeugs über ein Schutzelement 5 geschlossen, um auf diese Weise den Fahrzeuginnenraum gegenüber äußerer Blastwirkung, wie diese bei der Detonation von Sprengkörpern und insbesondere direkt unter dem Fahrzeugboden detonierenden Minen entsteht, abzuschirmen.

Einzelheiten der Anordnung des Schutzelements 5 und insbesondere dessen Kopplung mit der Lenkstange 2 werden nachfolgend zunächst unter Zuhilfenahme der Figuren 2 und 3 erläutert.

Die Lenkstange 2 ist im Bereich des Schutzelements 5 bzw. der Öffnung 4 des Fahrzeugbodens 3 mit einer gegenüber deren Mantel unbeweglich, aber austauschbar angeordneten Verstärkung 13 versehen. Die Verstärkung 13 bzw. die Lenkstange 2 ist axial beweglich innerhalb einer Führungshülse 7 angeordnet. Axiale Auf- und Abbewegungen der Lenkstange 2 werden nicht auf das Schutzelement 5 übertragen.

Die Lenkstange 2 kann innerhalb der Öffnung 4 in Richtung des Fahrzeugbodens 3 hin- und her bewegt werden. Die Lenkstange 2 ist über die Führungshülse 7 und ein Gelenk 6 derart mit dem Schutzelement 5 gekoppelt, dass dieses den Hin- und Herbewegungen der Lenkstange 2 folgt. Das Schutzelement 5 ist von insgesamt plattenförmiger bzw. deckelförmiger Gestalt und liegt von unterhalb des Fahrzeugbodens 3 flächig gegen die Öffnung 4 an, wodurch diese verschlossen und der Fahrzeuginnenraum gegenüber Blasteinwirkung abgeschirmt ist. Die Größe des Schutzelements 5 ist gegenüber der kleineren Öffnung 4 dabei so bemessen, dass die Öffnung 4 beim Hin- und Herbewegen der Lenkstange 2 stets verschlossen bleibt.

Wie insbesondere die Darstellung in Fig. 3 zeigt, ist oberhalb und unterhalb der Öffnung 4 jeweils ein Gummibalg 16 vorgesehen, der nicht nur zur ABC-Abdichtung des Fahrzeuginnenraums, sondern auch dazu dient, Verunreinigungen von dem Bereich des Schutzelements 5 fernzuhalten.

Die Lenkstange 2 bzw. die auf ihrem Umfang angeordnete Führungshülse 7 ist lose durch eine Öffnung 8 des Schutzelements 5 hindurchgeführt. Die Öffnung 8 weist dabei einen geringfügig größeren Durchmesser als die Führungshülse 7 auf, so dass die Lenkstange 2 in einem gewissen Maß Kippbewegungen gegenüber dem Schutzelement 5 ausführen kann, ohne dass dies zu Verkantungen bzw. einer Spaltbildung zwischen dem Schutzelement 5 und der Öffnung 4 führen würde. Der zwischen dem äußeren Umfang der Führungshülse 7 und der Innenkontur der Öffnung 8 verbleibende Spalt ist so bemessen, dass durch diesen keine nennenswerte Blastwirkung hindurchtreten kann. Zudem ist der Spalt mit einem Dichtelement 12 versehen.

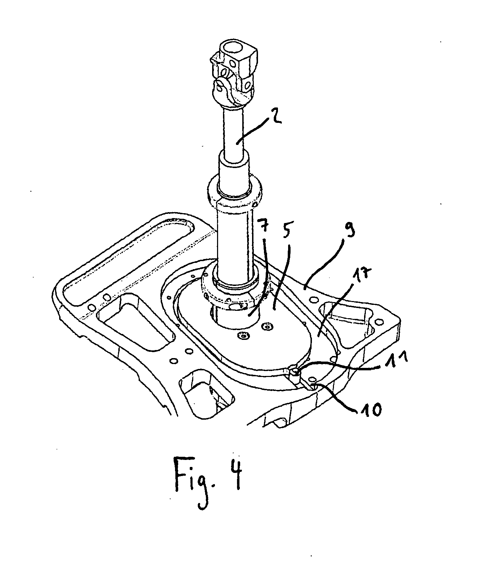

Gemäß der Darstellung in Fig. 3 verschließt das Schutzelement 5 die Öffnung 4 des Fahrzeugbodens 3 vollständig. Wie die Darstellung in Fig. 4 erkennen lässt, wird das Schutzelement 5 und die mit diesem über das Gelenk 6 verbundene Führungshülse 7 über ein plattenförmiges Halteelement 9 unterhalb des Fahrzeugbodens gehalten.

Das Schutzelement 5 liegt in einer Ausnehmung 17, die an der Oberseite des Halteelements 9 vorgesehen ist. Die Tiefe der Ausnehmung 17 entspricht der Dicke des Schutzelements 5, kann jedoch auch tiefer dimensioniert sein. Die Größe der Öffnung 17 ist im Vergleich zu dem kleineren Schutzelement 5 so bemessen, dass das Schutzelement 5 innerhalb der Ausnehmung 17 beim Hin- und Herbewegen der Lenkstange 2 nicht mit den Rändern der Ausnehmung 17 kollidiert.

Ferner sind Führungsmittel 10 und 11 vorgesehen, die die Bewegungen des Schutzelements 5 gegenüber der Ausnehmung 17 bzw. dem Halteelement 9 führen. Bei dem Führungsmittel 11 handelt es sich um einen mit dem Schutzelement 5 verbundenen Bolzen bzw. Stift, der nach unten hin in eine das zweite Führungsmittel 10 bildende Nut hineinragt. Auf diese Weise bleibt das mit dem Bolzen 11 versehene Ende des Schutzelements 5 stets in einer definierten Position gegenüber der Nut 10.

In der Darstellung gemäß Fig. 2 lässt sich die Ausgestaltung des Gelenks 6 als Kugelgelenk erkennen. Das Kugelgelenk 6 besteht aus einem mit dem Schutzelement 5 fest verbundenen Gelenkelement 18 und einem fest mit der Führungshülse 7 verbundenen Gelenkelement 19. Das Gelenk 6 ist nach Art eines Kugelgelenks ausgestaltet, so dass die geringfügigen Schwenkbewegungen der Lenkstange 2 innerhalb der Öffnung 8 keinen Einfluss auf die Lage des Schutzelements 5 haben. Gleichwohl folgt das Schutzelement 5 den Bewegungen der Lenkstange 2 in Richtung des Fahrzeugbodens.

Bewegungen der Lenkstange 2 in der Ebene der Öffnung 4 des Fahrzeugbodens 3 werden von dem Gelenk 6 nicht ausgeglichen, so dass das plattenförmige Schutzelement 5 diesen Bewegungen folgt. Die Öffnung 4 bleibt damit unabhängig von der Bewegung der Lenkstange 2 stets über das entsprechend größer dimensionierte Schutzelement 5 verschlossen.

Selbst bei einem Nachvornekippen der LKW-Fahrerkabine folgen sämtliche Elemente der Lenkungsdurchführung dieser Kippbewegung, ohne dass etwa eine Verbindung zwischen dem Schutzelement 5 und dem Fahrzeugboden 3 zu lösen wäre. Dies gilt insbesondere auch für die Gummibälge 16, die mit einem Ende gegenüber dem Fahrzeugboden 3 und mit dem anderen Ende gegenüber der Führungshülse 7 festgelegt sind.

Von daher ergibt sich eine wartungsfreundliche, den Fahrzeuginnenraum zuverlässig gegenüber äußerer Blasteinwirkung schützende Lenkungsdurchführung.

### Bezugszeichenliste:

- 1: Lenkungsdurchführung
- 2: Lenkstange
- 2a: Lenkstangenende
- 2b: Lenkstangenende
- 3: Fahrzeugboden
- 4: Öffnung
- 5: Schutzelement
- 6: Gelenk, Kugelgelenk
- 7: Führungshülse
- 8: Öffnung
- 9: Halteelement
- 10: Führungsmittel
- 11: Führungsmittel
- 12: Dichtelement
- 13: Verstärkung
- 16: Gummibalg
- 17: Ausnehmung
- 18: Gelenkelement
- 19: Gelenkelement

## Patentansprüche

1. Lenkungsdurchführung für militärische Fahrzeuge wobei die Lenkungsdurchführung einen Fahrzeugboden (3) mit einer durch eine Öffnung (4) des Fahrzeugbodens (3) hin- und her bewegbar nach fahrzeugaußen geführten Lenkstange (2) umfasst, **gekennzeichnet durch**
ein die Öffnung (4) gegen äußere Blastwirkung abschirmendes Schutzelement (5), das mit der Lenkstange (2) derart gekoppelt Ist, dass es die Öffnung (4) unabhängig von der Bewegung der Lenkstange (2) stets verschlossen hält, wobei die Lenkstange (2) durch eine Öffnung (8) des Schutzelements (5) lose hindurch geführt und über ein Gelenk (6) mit dem Schutzelement (5) gekoppelt ist.

2. Lenkungsdurchführung nach Anspruch 1, **gekennzeichnet durch** ein die Öffnung (8) gegenüber der Lenkstange (2) abdichtendes Element (12).

3. Lenkungsdurchführung nach einem der Ansprüche 1 bis 2, **dadurch gekennzeichnet, dass** das Gelenk (6) zwischen dem Schutzelement (5) und einer die Lenkstange (2) umgebenden Führungshülse (7) angeordnet ist.

4. Lenkungsdurchführung nach Anspruch 3, **dadurch gekennzeichnet, dass** die Lenkstange (2) innerhalb der Führungshülse (7) in Längsrichtung bewegbar angeordnet ist.

5. Lenkungsdurchführung nach Anspruch 3 oder 4, **dadurch gekennzeichnet, dass** die Lenkstange (2) im Bereich der Führungshülse (7) mit einer lösbaren Verstärkung (13) versehen ist.

6. Lenkungsdurchführung nach einem der vorhergehenden Ansprüche, **dadurch gekennzeichnet, dass** das Schutzelement (5) unterhalb des Fahrzeugbodens (3) angeordnet ist.

7. Lenkungsdurchführung nach Anspruch 6, **dadurch gekennzeichnet, dass** das Schutzelement (5) größer ist als die Öffnung (4) und flächig gegen diese anliegt.

8. Lenkungsdurchführung nach einem der vorhergehenden Ansprüche, **dadurch gekennzeichnet, dass** das Schutzelement (5) von einem am Fahrzeugboden (3) festgelegten Halteelement (9) gehalten wird.

9. Lenkungsdurchführung nach Anspruch 8, **dadurch gekennzeichnet, dass** das Schutzelement (5) über Führungsmittel (10, 11) gegenüber dem Halteelement (9) geführt bewegbar ist.

## Claims

1. A steering lead-through for military vehicles, wherein the steering lead-through comprises a vehicle floor (3) with a steering rod (2) which is guided towards the vehicle exterior through an aperture (4) in the vehicle floor (3) such that it can be moved back and forth,
**characterised by**
a protective element (5) which shields the aperture (4) against an external blast effect and is coupled to the steering rod (2) in such a way that it keeps the aperture (4) constantly closed irrespective of the movement of the steering rod (2), wherein the steering rod (2) is guided in unfixed manner through an aperture (8) of the protective element (5) and coupled to the protective element (5) by way of a joint (6).

2. A steering lead-through according to Claim 1, **characterised by** an element (12) sealing the aperture (8) with respect to the steering rod (2).

3. A steering lead-through according to one of Claims 1 to 2, **characterised in that** the joint (6) is arranged between the protective element (5) and a guide sleeve (7) surrounding the steering rod (2).

4. A steering lead-through according to Claim 3, **characterised in that** the steering rod (2) is arranged within the guide sleeve (7) such that it is movable in the longitudinal direction.

5. A steering lead-through according to Claim 3 or 4, **characterised in that** the steering rod (2) is provided with a removable brace (13) in the region of the guide sleeve (7).

6. A steering lead-through according to one of the preceding claims, **characterised in that** the protective element (5) is arranged underneath the vehicle floor (3).

7. A steering lead-through according to Claim 6, **characterised in that** the protective element (5) is larger than the aperture (4) and abuts flat against this.

8. A steering lead-through according to one of the preceding claims, **characterised in that** the protective element (5) is held by a holding element (9) fixed to the vehicle floor (3).

9. A steering lead-through according to Claim 8, **characterised in that** the protective element (5) can be moved in guided manner with respect to the holding element (9) by way of guide means (10, 11).

## Revendications

1. Traversée de direction pour véhicules militaires, dans laquelle la traversée de direction comprend un plancher de véhicule (3) doté d'une bielle de direction (2) guidée vers l'extérieur du véhicule de manière à pouvoir effectuer des mouvements de va-et-vient à travers une ouverture (4) du plancher de véhicule (3),
**caractérisée par**
un élément de protection (5) protégeant l'ouverture (4) contre l'effet de souffle extérieur, lequel élément de protection est couplé à la bielle de direction (2) de telle manière qu'il maintient toujours fermée l'ouverture (4) indépendamment du mouvement de la bielle de direction (2), dans lequel la bielle de direction (2) est guidée librement à travers une ouverture (8) de l'élément de protection (5) et est couplée à l'élément de protection (5) par l'intermédiaire d'une articulation (6).

2. Traversée de direction selon la revendication 1, **caractérisée par** un élément (12) assurant l'étanchéité de l'ouverture (8) par rapport à la bielle de direction (2).

3. Traversée de direction selon l'une quelconque des revendications 1 à 2, **caractérisée en ce que** l'articulation (6) est disposée entre l'élément de protection (5) et un manchon de guidage (7) entourant la bielle de direction (2).

4. Traversée de direction selon la revendication 3, **caractérisée en ce que** la bielle de direction (2) est disposée à l'intérieur du manchon de guidage (7) de manière à pouvoir être déplacée dans la direction longitudinale.

5. Traversée de direction selon la revendication 3 ou 4, **caractérisée en ce que** la bielle de direction (2) est pourvue, dans la zone du manchon de guidage (7), d'un renforcement (13) amovible.

6. Traversée de direction selon l'une quelconque des revendications précédentes, **caractérisée en ce que** l'élément de protection (5) est disposé sous le plancher de véhicule (3).

7. Traversée de direction selon la revendication 6, **caractérisée en ce que** l'élément de protection (5) est plus grand que l'ouverture (4) et repose à plat contre cette dernière.

8. Traversée de direction selon l'une quelconque des revendications précédentes, **caractérisée en ce que** l'élément de protection (5) est maintenu par un élément de maintien (9) fixé au plancher de véhicule (3).

9. Traversée de direction selon la revendication 8, **caractérisée en ce que** l'élément de protection (5) peut être déplacé de manière guidée par l'intermédiaire de moyens de guidage (10, 11) par rapport à l'élément de maintien (9).
